# FASCICULE DE BREVET EUROPEEN

(11) **EP 2 872 405 B1**
(45) Date de publication et mention de la délivrance du brevet: **28.09.2016**
(21) Numéro de dépôt: 13737590.3
(22) Date de dépôt: 12.07.2013
(51) Int. Cl.: B65B 53/06, B65B 59/00, B65B 59/04, F27B 9/10

(54) **INSTALLATION DE THERMORETRACTION COMPORTANT UNE ENCEINTE DE CHAUFFAGE MUNIE D'UNE BASE ET D'UNE CLOCHE**
WÄRMESCHRUMPFANLAGE MIT EINER HEIZKAMMER MIT EINEM BODEN UND EINER GLOCKE
HEAT-SHRINKING INSTALLATION COMPRISING A HEATING CHAMBER PROVIDED WITH A BASE AND A BELL

(30) Priorité: 12.07.2012 FR 1256747
(43) Date de publication de la demande: 20.05.2015
(73) Titulaire: Sleever International Company, 91420 Morangis (FR)
(72) Inventeur: FRESNEL, Eric, F-75014 Paris (FR)
(74) Mandataire: Parzy, Benjamin Alain
(86) Numéro de dépôt international: PCT/EP2013/064793
(87) Numéro de publication internationale: WO 2014/009528

(56) Documents cités:
- EP-A1- 1 232 948
- EP-A1- 2 319 769
- EP-A1- 2 347 960
- WO-A1-01/57458
- FR-A1- 2 280 555
- FR-A1- 2 798 989

## Description

Installation de thermorétraction comportant une enceinte de chauffage munie d'une base et d'une cloche L'invention concerne une installation de thermorétraction de manchons en matériau thermorétractable enfilés sur des supports tels que des récipients.

### ARRIERE PLAN TECHNOLOGIQUE DE L'INVENTION

Dans le domaine de la thermorétraction, il est connu des installations de thermorétraction de manchons en matériau thermorétractable enfilés sur des supports, tels que des récipients, comportant une enceinte pourvue de moyens de diffusion de chaleur au sein de l'enceinte et un convoyeur pour convoyer les supports dans l'enceinte entre une entrée de l'enceinte et une sortie de l'enceinte.

Une telle installation est par exemple connue du document brevet FR2280555

Au fur et à mesure du convoyage du support à l'intérieur de l'enceinte, sous l'action du chauffage induit par les moyens de diffusion de chaleur, le manchon se ramollit puis se rétracte sur le support.

Les moyens de diffusion de chaleur comprennent par exemple des moyens de chauffage électrique tels que des éléments infrarouges fixés à des parois latérales de l'enceinte qui s'étendent de part et d'autre du convoyeur, les éléments infrarouge étant reliés à une source de courant électrique.

Les moyens de diffusion de chaleur peuvent également comprendre des moyens de chauffage par vapeur qui comprennent des diffuseurs de vapeur fixés aux parois latérales de l'enceinte, les diffuseurs de vapeur étant reliés à un orifice d'arrivée de vapeur ménagé dans l'enceinte.

Toutefois, de telles installations s'avèrent consommer énormément de puissance pour d'obtenir le chauffage requis dans l'enceinte.

### OBJET DE L'INVENTION

Un but de l'invention est de proposer une installation de thermorétraction permettant de limiter la puissance consommée par l'installation.

### BREVE DESCRIPTION DE L'INVENTION

En vue de la réalisation de ce but, on propose une installation de thermorétraction de manchons en matériau thermorétractable enfilés sur des supports, tels que des récipients, comportant une enceinte pourvue de moyens de diffusion de chaleur et au moins un convoyeur pour convoyer les supports dans l'enceinte entre une entrée de l'enceinte et une sortie de l'enceinte, l'enceinte comprenant une base et une cloche qui est montée mobile entre une position dégagée permettant l'accès au convoyeur et une position opérationnelle où elle est rapportée à étanchéité contre la base, la cloche comportant deux ouvertures au travers desquelles le convoyeur s'étend lorsque la cloche est en position opérationnelle.

Selon l'invention, la cloche comporte une cloison interne montée mobile entre une position escamotée et une position de service dans laquelle la cloison délimite avec des parois latérales de la cloche et la base une chambre principale de l'enceinte soumis à l'action des moyens de diffusion de chaleur lorsque la cloche est en position opérationnelle.

Ainsi, grâce à la cloison, il n'est plus nécessaire de chauffer tout le volume intérieur de la cloche mais uniquement le volume de la chambre principale ce qui permet de limiter la puissance consommée par l'installation.

En jouant sur la position de service de la cloison, il est donc possible d'adapter le volume de la chambre principale en fonction du type de support et/ou de manchon convoyés.

En position de service, la cloison interne forme un toit de la chambre principale. La cloison interne définit ainsi seule la chambre principale avec les parois latérales de la cloche et la base de l'enceinte.

Selon un aspect particulier de l'invention, la position de service de la cloison est définie par butée de la cloison contre les moyens de diffusion de chaleur.

Selon un mode de réalisation particulier, l'installation comporte des moyens de déplacement de la cloche entre la position opérationnelle et la position dégagée qui agissent directement sur la cloison de sorte que lorsque la cloison est déplacée depuis la position de service jusqu'à la position escamotée, la cloison vient en butée contre la cloche et entraîne la cloche de la position opérationnelle à la position dégagée.

Selon un aspect particulier de l'invention, les moyens de diffusion de chaleur sont des moyens de chauffage par vapeur d'eau.

Selon un mode de réalisation particulier, la cloison est équipée d'au moins une vanne à ouverture réglable pour une aspiration des gaz présents dans la chambre principale à travers la cloison.

Selon un aspect particulier de l'invention, la cloison comporte un joint d'étanchéité à la vapeur s'étendant le long de ses bords.

Selon un mode de réalisation particulier, le joint d'étanchéité à la vapeur est une bavette inclinée en direction de la base lorsque la cloison est en position de service.

Selon un aspect particulier de l'invention, les parois latérales de la cloche sont reliées par un sommet de la cloche qui est de forme arrondie de sorte que des gouttes de condensation se formant sur le sommet de la cloche puissent s'écouler le long desdites parois latérales vers la base lorsque la cloche est en position opérationnelle.

Selon un mode de réalisation particulier, la cloison comporte une bavette s'étendant le long de ses bords et inclinée en direction de la base lorsque la cloison est en position de service et comporte un dôme sur une première face de la cloison opposée à celle délimitant la chambre principale, le dôme étant de forme complémentaire au sommet de la cloche de sorte que des gouttes de condensation formées sur le dôme puissent s'écouler vers la bavette.

Selon un aspect particulier de l'invention, la base comporte au moins une gouttière s'étendant le long du convoyeur, la gouttière comprenant au moins un orifice relié à un canal d'évacuation.

Selon un mode de réalisation particulier, les moyens de diffusion de chaleur sont portés par la base.

Selon un aspect particulier de l'invention, la cloche est montée mobile entre la position dégagée et la position opérationnelle selon un mouvement de translation.

Selon un mode de réalisation particulier, l'installation comporte des moyens de génération de chaleur raccordés aux moyens de diffusion de chaleur et un bâti portant la base et dans lequel sont agencés au moins en partie lesdits moyens de génération de chaleur, l'installation comportant en outre des moyens de séchage par air chaud d'un bras de retour du convoyeur, lesdits moyens de séchage étant raccordés à des moyens d'extraction d'air dans le bâti.

Selon un aspect particulier de l'invention, les moyens de diffusion de chaleur sont des moyens de chauffage par vapeur d'eau, l'enceinte comprenant une chambre principale dans laquelle sont agencés les moyens de diffusion de chaleur et deux chambres secondaires encadrant la chambre principale et équipées chacune de moyens d'aspiration des gaz présents dans les chambres secondaires.

### BREVE DESCRIPTION DES DESSINS

L'invention sera mieux comprise à la lumière de la description qui suit en référence aux figures des dessins annexés parmi lesquelles :
- la figure 1 est une vue en perspective schématique d'une installation de thermorétraction selon l'invention, une cloche d'une enceinte de l'installation étant illustrée en position opérationnelle ;
- la figure 2 est une vue en perspective schématique d'une partie de l'installation de thermorétraction illustrée à la figure 1, des parois latérales d'un côté de l'installation de thermorétraction n'étant pas représentées ;
- la figure 3 est une vue en perspective d'une base de l'enceinte de l'installation de thermorétraction illustrée à la figure 1 ;
- la figure 4 est une vue en perspective de moyens de diffusion de chaleur de l'installation de thermorétraction illustrée à la figure 1 ;
- la figure 5 est une vue en perspective d'une cloison interne de la cloche illustrée à la figure 1 ;
- la figure 6 est une vue en perspective schématique d'une partie de l'installation de thermorétraction illustrée à la figure 1, la cloche étant illustrée en position dégagée ;
- la figure 7 est une vue en perspective de moyens de génération de chaleur de l'installation de thermorétraction illustrée à la figure 1;
- la figure 8 est une vue en perspective de moyens de génération de chaleur d'une installation de thermorétraction selon un autre mode de réalisation de l'invention.

### DESCRIPTION DETAILLEE DE L'INVENTION

L'installation décrite ici est destinée à la thermorétraction de manchons en matériau thermorétractable enfilés sur des supports, tels que des récipients. L'installation est par exemple agencée entre une installation de découpe et de pose de manchons en matériau thermorétractables sur les supports et une installation de remplissage des supports.

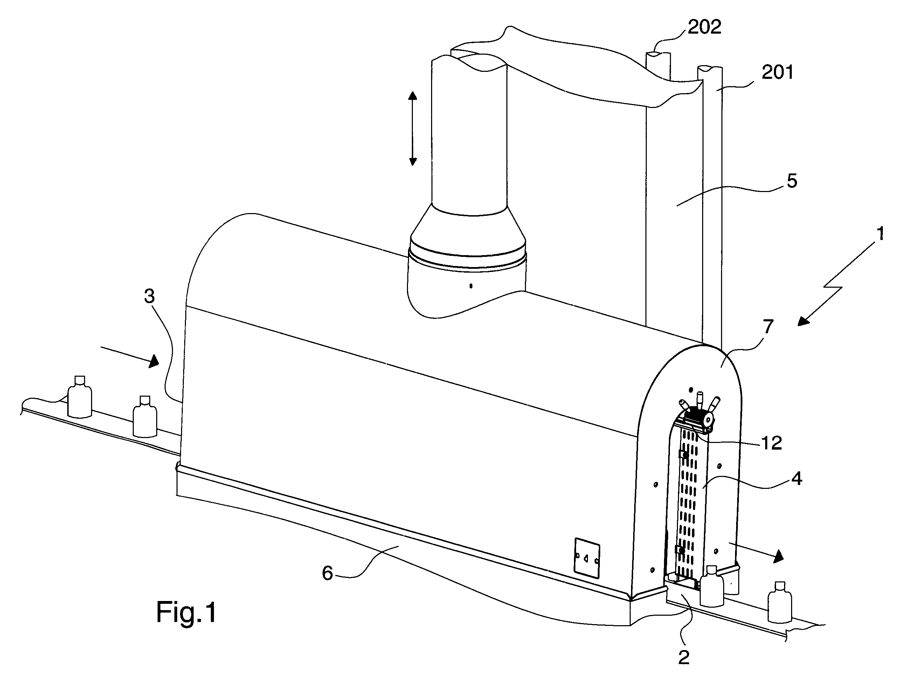

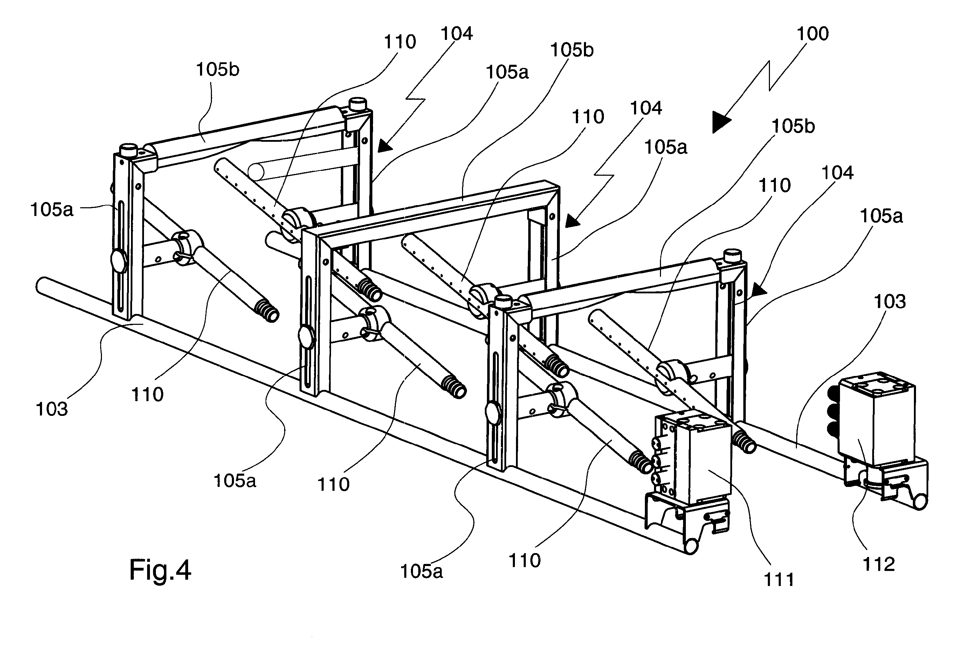

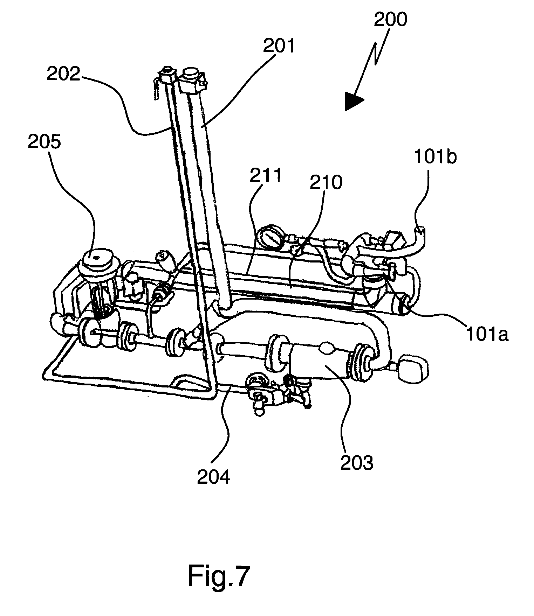

En référence aux figures 1, 2, 4 et 6, l'installation de thermorétraction selon l'invention comporte une enceinte 1 qui est pourvue de moyens de diffusion de chaleur, ici des moyens de chauffage par vapeur d'eau 100, et un convoyeur 2 pour convoyer les supports dans l'enceinte 1 entre une entrée de l'enceinte 1 et une sortie de l'enceinte 1 selon la direction indiquée par les flèches. L'installation comporte en outre des moyens de génération de vapeur d'eau 200 pour fournir de la vapeur aux moyens de chauffage 100 comme plus visibles à la figure 7.

Selon un mode de réalisation particulier, l'installation comporte un bâti 6 qui porte l'enceinte 1 et dans lequel sont agencés au moins en partie les moyens de génération de vapeur d'eau 200. L'installation comporte en outre ici des moyens de séchage par air chaud d'un bras de retour du convoyeur 2, les moyens de séchage étant raccordés à des moyens d'extraction d'air dans le bâti 6.

En effet, les moyens de génération de vapeur d'eau 200 chauffent considérablement l'intérieur du bâti 6. Ainsi, au lieu de générer de l'air chaud pour le séchage du bras de retour du convoyeur 2, on récupère directement l'air chaud du bâti 6 ce qui permet de réduire la consommation d'énergie des moyens de séchage. En outre, cela permet d'évacuer une partie de l'air chaud présent dans le bâti 6 et donc de limiter une surchauffe à l'intérieur du bâti 6.

Les moyens de chauffage par vapeur d'eau 100 et les moyens de génération de vapeur d'eau 200 seront décrits plus en détail dans un deuxième temps. On s'attache tout d'abord à décrire l'enceinte 1.

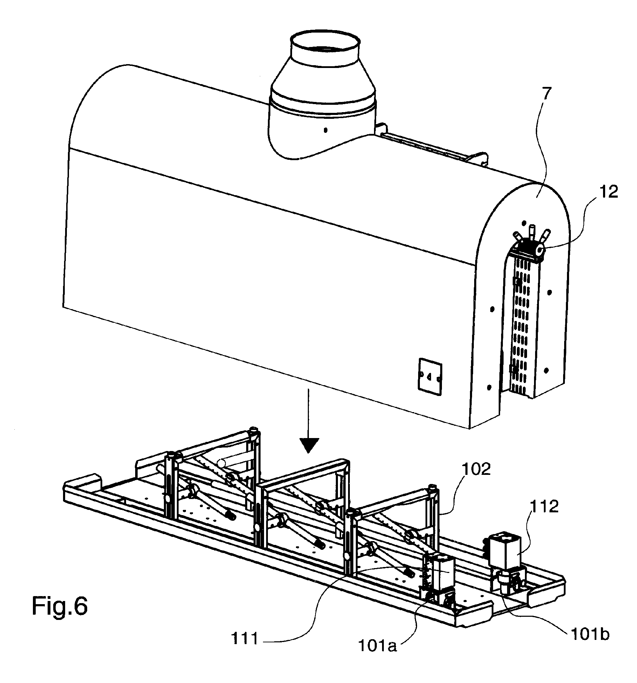

L'enceinte 1 comprend une base 10 et une cloche 7 montée mobile entre une position opérationnelle où elle est rapportée à étanchéité contre la base 10 comme illustré à la figure 1, et une position dégagée permettant l'accès au convoyeur 2 comme illustré à la figure 6. Bien entendu, la cloche 7 comporte ici deux ouvertures 3, 4 au travers desquelles le convoyeur 2 s'étend lorsque la cloche 7 est en position opérationnelle.

Ainsi lorsque la cloche 7 est en position dégagée, il est bien plus aisé d'intervenir sur l'installation selon l'invention que sur une installation de l'art antérieur où l'enceinte est d'un seul bloc. En particulier, il s'avère bien plus simple d'agir sur les moyens de chauffage par vapeur d'eau 100 ou sur le convoyeur 2.

Selon un aspect particulier de l'invention, les parois latérales de la cloche 7 sont reliées par un sommet de la cloche qui est de forme arrondie.

La vapeur a tendance à se condenser sur les parois de la cloche 7 qui sont souvent froides. Le sommet de la cloche 7 est donc avantageusement conformé pour que les gouttes d'eau issues de la condensation se formant sur le sommet de la cloche 7 puissent s'écouler le long des parois latérales de la cloche 7 vers la base 10 lorsque la cloche 7 est en position opérationnelle. Ainsi, les gouttes d'eau ne retombent pas dans le centre de l'enceinte 1 et ne viennent donc pas polluer la vapeur d'eau ou les supports lors de la thermorétraction.

La cloche 7 est ici équipée d'au moins un joint d'étanchéité (non visible sur les figures) qui s'étend le long de ses bords en regard de la base 10 et qui, lorsque la cloche est en position opérationnelle, vient au contact de la base 10 en étant appuyé sur celle-ci avec une pression suffisante pour assurer une étanchéité de l'enceinte 1.

Ici, l'installation comporte des moyens de déplacement de la cloche 7 entre la position escamotée et la position dégagée qui comprennent une colonne verticale 5 le long de laquelle la cloche 7 coulisse entre sa position dégagée et sa position opérationnelle comme indiqué par la flèche. Les positions dégagée et opérationnelle sont ici à la verticale de la base 10. Bien entendu, par base, on entend que la base 10 est sensiblement parallèle au sol sur lequel repose l'installation.

Ainsi, même lorsque la cloche 7 est en position dégagée, l'installation est d'un encombrement réduit. En particulier, l'installation n'occupe que très peu de place au sol. Il s'avère donc très facile de circuler autour de l'enceinte 1 ce qui simplifie encore davantage une intervention sur la base 10, le convoyeur 2 ou les moyens de chauffage par vapeur d'eau 100. Le déplacement de la cloche 7 d'une position à une autre ne gêne donc pas un opérateur qui se trouverait à proximité de la base 10.

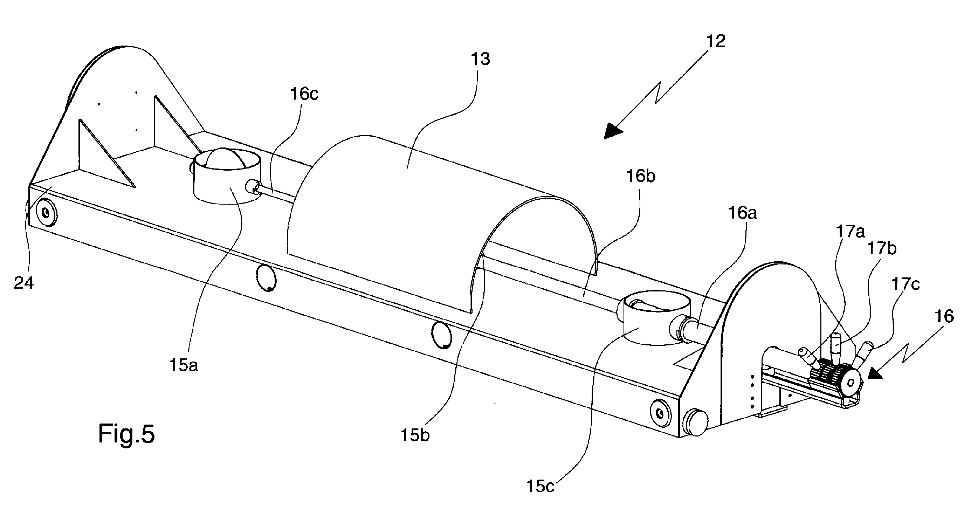

En référence aux figures 1, 2, 5 et 6, selon l'invention, la cloche 7 comporte une cloison interne 12 montée mobile entre une position escamotée (comme visible aux figures 1, 2, 5 et 6) et une position de service dans laquelle la cloison 12 délimite avec des parois latérales de la cloche 7 et la base 10 une chambre principale 11 de l'enceinte 1 qui est soumise à l'action des moyens de chauffage par vapeur d'eau 100 lorsque la cloche 7 est en position opérationnelle. La cloison 12 forme ainsi un toit de la chambre principale 11.

Ainsi, grâce à la cloison 12, il n'est plus nécessaire de chauffer tout le volume intérieur de la cloche 7 mais uniquement le volume de la chambre principale 11. Il est donc possible de réduire la consommation d'énergie des moyens de chauffage par vapeur d'eau 100 grâce à la limitation du volume à chauffer. Ainsi, en jouant sur la position de service de la cloison 12, il est possible d'adapter le volume de la chambre principale 11 en fonction du type de support et/ou de manchon convoyés.

Selon un mode de réalisation particulier, la position de service de la cloison 12 est définie par butée de la cloison 12 contre les moyens de chauffage par vapeur d'eau 100.

De cette façon, il est aisé de définir la position de service de la cloison 12 et également de déterminer le volume de la chambre principale 11.

Selon un aspect particulier de l'invention, la position escamotée de la cloison 12 est définie par butée de la cloison 12 contre la cloche 7. Ici, la cloison 12 comporte un dôme 13 sur une face de la cloison 12 opposée à celle formant le toit de la chambre principale 11. Le dôme 13 est de forme complémentaire au sommet de la cloche 7. Ainsi, lorsque la cloison 12 est déplacée de la position de service à la position escamotée, le dôme 13 vient buter contre le sommet de la cloche 7 définissant ainsi la position escamotée de la cloison 12.

Ici, les moyens de déplacement agissent directement sur la cloison 12 pour lever celle-ci de sorte que lorsque la cloison 12 est déplacée depuis la position de service jusqu'à la position escamotée, le dôme 13 de la cloison 12 vient en butée contre le sommet de la cloche 7 et entraîne alors la cloche 7 de la position opérationnelle à la position dégagée. Inversement, lorsque les moyens de déplacement baissent la cloison 12, la cloche 7 descend avec la cloison 12 jusqu'à arriver en position opérationnelle, la cloison 12 continuant à descendre jusqu'à atteindre sa position de service en butée contre les moyens de chauffage par vapeur d'eau 100.

Selon un mode de réalisation particulier, la cloison 12 compote trois vannes à ouverture réglable 15a, 15b, 15c pour aspirer la vapeur présente dans la chambre principale 11 à travers la cloison 12 ce qui aide à réguler la température régnant dans la chambre principale 11 et évite un surplus de vapeur dans la chambre principale 11.

Les vannes 15a, 15b, 15c sont ici agencées à intervalle régulier le long de la cloison 12 et sont toutes sensiblement centrées sur la cloison 12. Ainsi, la vapeur est aspirée de façon sensiblement homogène dans la chambre principale 11 ce qui limite la perturbation de l'atmosphère dans la chambre principale 11.

Ici, l'ouverture de chaque vanne 15a, 15b, 15c est réglable de façon indépendante. Selon un mode de réalisation particulier, les ouvertures des vannes 15 peuvent être réglées même lorsque la cloche 7 est en position opérationnelle. A cet effet, la cloison 12 est équipée de moyens de réglage des vannes 15a, 15b, 15c qui comportent une tige 16 qui s'étend sur tout le long de la cloison 12 et à travers au moins l'une des ouvertures de la cloche 7 de sorte qu'une extrémité de la tige 16 soient située à l'extérieur de la cloche 7. La tige 16 comporte un premier conduit 16a qui s'étend entre l'extrémité de la tige 16 et un clapet de la première des vannes 15a de sorte qu'une rotation du premier conduit 16a relativement à la cloison 12 entraîne une rotation du clapet de la première vanne 15a. Les moyens de réglage comportent en outre un premier levier 17a d'orientation du premier conduit 16a relativement à la cloison 12 qui est porté par l'extrémité de la tige 16. Ainsi, le premier levier 17a accessible à l'extérieur de la cloche 7 permet de régler progressivement l'ouverture de la vanne. De même, les moyens de réglage comportent des conduits 16b, 16c et des leviers 17b, 17c associés respectivement à la deuxième vanne 15b et à la deuxième vanne 15c.

Selon un aspect particulier de l'invention, la cloison 12 comporte une bavette 24 s'étendant le long de ses bords et inclinée en direction de la base 10 lorsque la cloison 12 est en position de service. Ladite bavette 24 joue ici le rôle d'un joint d'étanchéité à la vapeur. En effet, la bavette 24 est conformée de sorte que, lorsque la cloison 12 est en position de service, la bavette 24 autorise l'écoulement des gouttes d'eau le long des parois latérales de la cloche 7 vers la base 10 mais empêche la vapeur d'eau de sortir de la chambre principale 11 en direction du sommet de la cloche 7.

Cela permet de mieux contrôler la température régnant dans la chambre principale 11 tout en autorisant malgré tout l'écoulement de l'eau vers la base 10.

En outre, si des gouttes d'eau formées sur le sommet de la cloche 7 tombent malgré tout sans s'écouler le long des parois latérales de la cloche 7, le dôme 13 permet d'éviter que lesdites gouttes tombent directement sur les faces de la cloison 12 ou sur les vannes 15a, 15b, 15c. De plus, la forme arrondie du dôme 13 favorise l'écoulement desdites gouttes, ou de gouttes qui se sont directement formées sur le dôme 13, en direction de la bavette 24 qui elle-même favorise l'écoulement des gouttes vers la base 10 le long des parois latérales de la cloche 7.

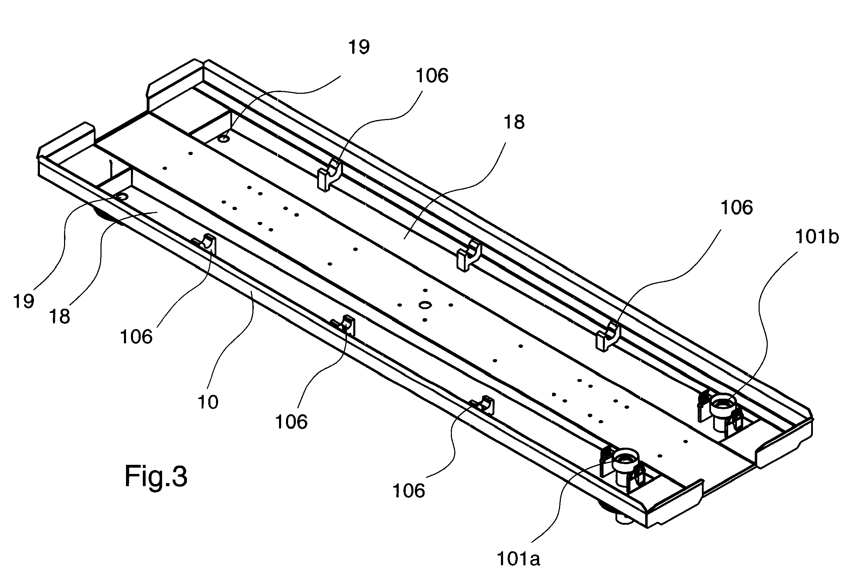

En référence à la figure 3, selon un mode de réalisation particulier, la base 10 comporte de façon symétrique deux gouttières 18 s'étendant chacune de part et d'autre du convoyeur 2 et le long du convoyeur 2, chaque gouttière 18 comportant chacune un orifice 19 (un seul étant illustré ici) relié à au moins un canal d'évacuation

La vapeur ayant tendance à se condenser sur les supports qui sont souvent froids, l'eau issue de la thermorétraction est donc avantageusement évacuée par les gouttières 18. Les gouttières 18 sont ici en pente en direction de l'orifice associé pour faciliter l'écoulement de l'eau.

De préférence, les gouttières 18 sont conformées pour recevoir également les gouttes d'eau qui se sont écoulées le long des parois latérales de la cloche 7 afin de faciliter l'évacuation de l'eau hors de l'enceinte.

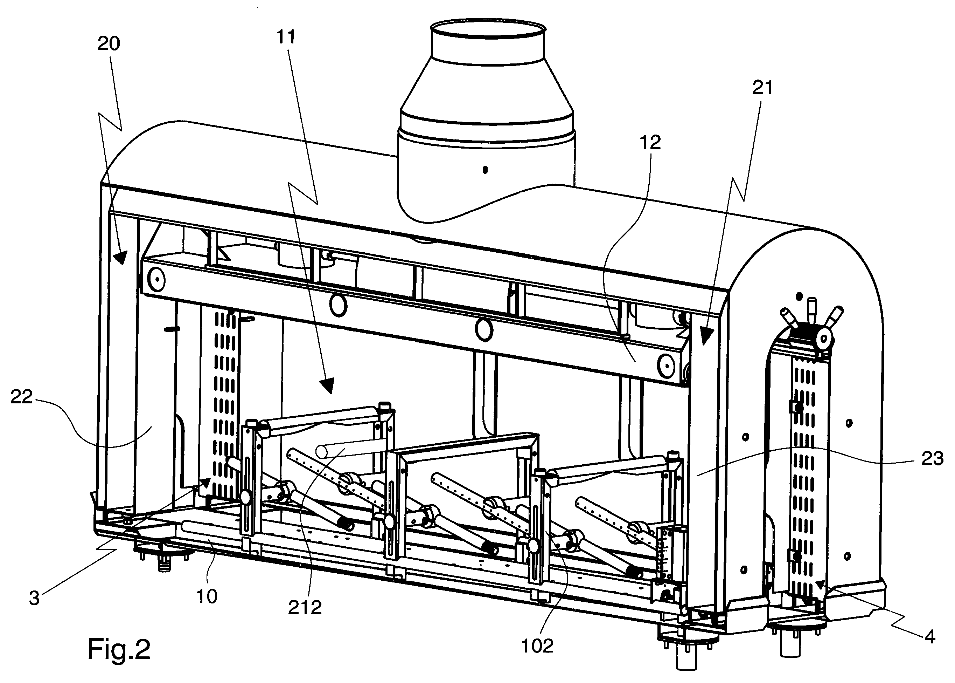

En référence à la figure 2, l'enceinte comporte ici une première chambre secondaire 20 et une deuxième chambre secondaire 21, les chambres secondaires encadrant la chambre principale 11 et étant équipées chacune de moyens d'aspiration (non illustrés ici) de la vapeur présente dans les chambres secondaires.

La cloche 7 comprend ici une première paroi interne 22 et une deuxième paroi interne 23 qui définissent avec des faces latérales externes de la cloche 7 et avec la base 10, les chambres secondaires lorsque la cloche est en position opérationnelle. La première paroi interne 22 et une deuxième paroi interne 23 définissent en outre la chambre principale 11 avec la base 10 et la cloison 12. La cloison 12 se déplace donc uniquement dans la chambre principale 11 de sorte que les chambres secondaires restent d'un volume identique malgré un déplacement de ladite cloison 12.

Bien entendu l'enceinte de l'invention n'est pas limitée au mode de réalisation décrit et on peut y apporter des variantes.

En particulier, bien que dans l'exemple illustré, la cloche est déplacée selon un mouvement de translation verticale, la cloche pourra plus généralement être montée mobile entre la position dégagée et la position opérationnelle selon un autre mouvement que celui décrit, comme par exemple par un mouvement de rotation.

La cloison interne pourra être montée mobile entre la position de service et la position escamoté selon un autre mouvement que celui décrit comme par exemple un mouvement de rotation. Bien qu'ici, ce soit la cloison interne qui entraîne un mouvement de la cloche, on pourra faire en sorte que la cloche entraîne un mouvement de la cloison interne à la place.

De même, bien qu'ici la cloison comporte trois vannes d'extraction de la vapeur, la cloison pourra ne pas comporter de vanne ou un nombre différent de vannes. La vanne ou les vannes pourront être réglées toutes en même temps.

A présent que l'enceinte 1 a été décrite en détail, on s'attache maintenant à décrire les moyens de chauffage par vapeur d'eau 100.

En référence aux figures 2, 4 et 5, les moyens de chauffage par vapeur d'eau 100 sont ici portés par la base 10. Ainsi, l'accès aux moyens de chauffage par vapeur d'eau 100 est encore facilité lorsque la cloche 7 est en position dégagée.

Les moyens de chauffage par vapeur 100 comportent ici des moyens de diffusion de vapeur et des moyens de raccordement rapide qui sont adaptés à coopérer de façon étanche avec un premier orifice d'arrivée de vapeur 101a et un deuxième orifice d'arrivée de vapeur 101b, les deux orifices d'arrivés de vapeur étant ménagés dans l'enceinte de sorte à être placés de part et d'autre du convoyeur 2.

De préférence, les moyens de chauffage par vapeur d'eau 100 forment un ensemble unitaire rapporté de façon démontable sur la base 10.

Ainsi, il s'avère très simple de changer les moyens de chauffage par vapeur d'eau 100 simplement en désolidarisant et en soulevant l'ensemble unitaire. L'installation selon l'invention s'avère donc particulièrement modulaire. En outre, lors d'un changement de supports à convoyer à travers l'enceinte 1, il est aisé de remplacer les moyens de chauffage par vapeur d'eau 100 présents dans l'enceinte 1 par d'autres moyens de chauffage par vapeur d'eau 100, formant également un ensemble modulaire rapporté sur la base de l'enceinte, plus adaptés à la thermorétraction de manchons sur les nouveaux supports.

Par moyens de raccordement rapide, on entend bien sûr des moyens permettant de désolidariser directement l'ensemble unitaire de la base 10 simplement en soulevant l'ensemble unitaire comme des moyens de raccordement par enclipsage ou bien des moyens nécessitant une ou deux étapes de démontage très simples à l'aide d'un outil standard, comme un tournevis, avant de pouvoir soulever l'ensemble unitaire.

Selon un mode de réalisation particulier, les moyens de chauffage par vapeur 100 comportent un châssis 102 qui porte les moyens de raccordement rapide et les moyens de diffusion de vapeur. Ici, le châssis 102 comporte deux longerons 103 s'étendant chacun le long d'un côté différent du convoyeur 2 et trois arceaux 104 solidarisés chacun à chaque longeron 103 de sorte que les arceaux 104 s'étendent au dessus du convoyeur 2. Les arceaux 104 sont ici agencés à intervalles réguliers sur les longerons 103. Chaque arceau 104 comporte ici deux montants verticaux 105a qui s'étendent, parallèlement entre eux, selon une normale à la base 10 lorsque le châssis 102 est rapporté sur la base 10. Une extrémité de chaque montant vertical 105a est liée à l'un des longerons et l'autre extrémité est libre. Chaque arceau 104 comporte en outre un montant horizontal 105b reliant les extrémités libres des deux montants verticaux 105a.

Selon un aspect particulier de l'invention, les montants horizontaux 105b des arceaux 104 forment la butée contre laquelle la cloison vient s'arrêter et qui définie la position de service de la cloison 12.

Les moyens de diffusion de vapeur sont ici seulement fixés à la base 10 par les moyens de raccordement rapide.

A cet effet, comme plus visible à la figure 3, la base 10 comporte ici des pieds de réception 106 qui sont situés de part et d'autre du convoyeur 2. Les pieds de réception 106 reçoivent les longerons 103 du châssis 102 lorsque celui-ci est rapporté sur la base 10. Le châssis 102 est donc seulement fixé à la base 10 par les moyens de raccordement et les pieds de réception 106 aident à stabiliser le châssis 102 sur la base 10. Les pieds de réception 106 sont ici agencés à intervalles réguliers sur la base 10. Les pieds de réception 106 sont ici agencés dans les gouttières 18.

Selon un mode de réalisation particulier, les moyens de diffusion de vapeur comportent une première série de diffuseurs qui sont solidarisés au châssis 102 de sorte que lesdits diffuseurs s'étendent tous sensiblement le long d'un premier côté du convoyeur 2 et une deuxième série de diffuseurs qui sont solidarisés au châssis 102 de sorte que lesdits diffuseurs s'étendent tous sensiblement le long d'un deuxième côté du convoyeur 2 opposé au premier côté.

Les diffuseurs s'étendent donc le long du convoyeur 2 sensiblement sur toute la longueur du convoyeur 2 et de part et d'autre du convoyeur 2 ce qui permet de diffuser de la vapeur sur les manchons tout le long du convoyage des supports dans l'enceinte 1. Le chauffage des manchons est ainsi régulier et donc mieux contrôlé.

Selon un mode de réalisation particulier, le châssis 102 comporte deux éléments comprenant des moyens de solidarisation temporaire entre eux, le premier élément portant la première série de diffuseurs et le deuxième élément portant la deuxième série de diffuseurs.

Ainsi, le châssis 102 peut être désolidarisé de la base 10 en bloc puis être séparé en ses deux éléments. Il est donc possible de ne modifier qu'une partie des diffuseurs en solidarisant par exemple le premier élément avec un nouveau deuxième élément portant une autre série de diffuseurs. L'installation selon l'invention s'avère donc particulièrement modulaire. En outre, lors d'un changement de supports à convoyer à travers l'enceinte 1, il est aisé de remplacer les diffuseurs d'une seule série par d'autres diffuseurs plus adaptés à la thermorétraction de manchons sur les nouveaux supports. Il s'avère donc aisé de réaliser une thermorétraction asymétrique pour des récipients comportant des faces différentes en choisissant judicieusement le premier élément et le deuxième élément.

Selon un mode de réalisation particulier, les différents diffuseurs sont solidarisés de façon démontable et réglable au châssis 102.

Ainsi, il s'avère très simple de changer ou de régler une partie ou la totalité des diffuseurs. Il n'est donc pas nécessaire de changer systématiquement les moyens de chauffage par vapeur 100 mais seulement certains diffuseurs, par exemple lorsque seuls certains diffuseurs sont défectueux. L'installation selon l'invention s'avère donc encore plus modulaire. De plus, lors d'un changement de supports à convoyer à travers l'enceinte 1, il est possible et aisé de remplacer une partie ou la totalité des diffuseurs présents dans l'enceinte 1 par d'autres diffuseurs et/ou d'orienter différemment une partie ou la totalité des diffuseurs afin que les diffuseurs soient le plus adapté possible à la thermorétraction de manchons sur les nouveaux supports.

Ici, chaque arceau 104 porte au niveau de l'un des montants verticaux 105a un diffuseur de la première série et au niveau de l'autre des montants verticaux 105a un diffuseur de la deuxième série.

Selon un mode de réalisation particulier, chaque arceau 104 est sensiblement agencé sur le châssis 102 de sorte à être situé sous une des trois vannes 15 pour l'extraction de la vapeur dans la chambre principale 11. Lesdites vannes 15 sont ainsi à la verticale des diffuseurs et sont donc particulièrement bien agencées pour extraire la vapeur puisque la concentration de vapeur est plus importante au niveau des diffuseurs.

Ici, chaque diffuseur est solidarisé à l'arceau 104 associé de sorte être à déplaçable le long du montant vertical 105a associé. Le diffuseur est ainsi positionnable à des hauteurs différentes dans l'enceinte 1.

Chaque diffuseur est ici également solidarisé à l'arceau 104 associé de sorte à être déplaçable autour d'un axe de rotation sensiblement parallèle au montant horizontal 105b associé. Le diffuseur est ainsi orientable différemment par rapport aux supports convoyés par le convoyeur 2 tout en restant étendu le long du convoyeur 2.

Selon un mode de réalisation particulier, chaque diffuseur comporte une rampe 110 percée d'orifices de diffusion de vapeur et un tuyau d'amenée de vapeur (non représenté ici) raccordé à une extrémité à la rampe 110 et à l'autre extrémité aux moyens de raccordement rapide.

Ainsi, la rampe 110 a une forme particulièrement adaptée pour s'étendre le long du convoyeur 2 de sorte que les orifices de diffusion de vapeur forment sensiblement une ligne de diffusion de vapeur continue sur les manchons tout le long du convoyage des supports dans l'enceinte 1. Le chauffage des manchons est ainsi extrêmement régulier et donc mieux contrôlé.

La rampe 110 et le tuyau d'amenée sont par exemple en matériau composite ou en plastique.

Ainsi, les rampes 110 et les tuyaux d'amenée sont très légers ce qui permet d'avoir un ensemble unitaire de faible masse. En outre, dans l'art antérieur, les diffuseurs sont en métal. Or si le métal n'est pas de bonne qualité, il a tendance à s'oxyder ce qui provoque une obstruction partielle ou totale des orifices de diffusion et une pollution de la vapeur qui passe à travers lesdits orifices. Les rampes et les tuyaux d'amenée de l'invention permettent d'obvier à ces inconvénients.

Ici, chaque rampe 110 est solidarisée à l'arceau 104 associé sensiblement au niveau du centre de la rampe 110. Selon un mode de réalisation particulier, chaque rampe 110 est solidarisée à l'arceau 104 par une liaison permettant son positionnement réglable.

Selon un autre aspect de l'invention, les moyens de raccordement comportent un premier boîtier de distribution 111 connecté au premier orifice d'arrivée de vapeur 101a et un deuxième boîtier de distribution 112 connecté au deuxième orifice d'arrivée de vapeur 101b. Les rampes 110 de la première série sont toutes reliées au premier orifice d'arrivée de vapeur 101a par l'intermédiaire du premier boîtier 111 et les rampes de la deuxième série sont toutes reliées au deuxième orifice d'arrivée de vapeur 101b par l'intermédiaire de l'autre des boîtiers 112.

Ici, les rampes 110 de la première série sont toutes raccordées indépendamment les uns des autres au premier boîtier 111, le premier boîtier 111 permettant un réglage indépendant d'un débit de vapeur fourni à chaque rampe 110. De la même façon, les rampes 110 de la deuxième série sont toutes raccordées indépendamment les uns des autres au deuxième boîtier 112, le deuxième boîtier 112 permettant un réglage indépendant d'un débit de vapeur fourni à chaque rampe 110.

A cet effet, le premier boîtier 111 et le deuxième boîtier 112 comportent chacun des moyens de réglage de débits respectifs fournis à chaque rampe 110.

Les moyens de réglage comportent ici des ensembles vis-pointeau associés chacun à l'un des orifices de distribution de vapeur 120 du boîtier auquel est connecté l'une des rampes 110, chaque pointeau ayant un profil arrondi et étant déplaçable par la vis associée pour venir obstruer partiellement ou complètement l'orifice de distribution associé 120.

Grâce aux ensembles vis-pointeaux, le réglage du débit de vapeur distribué à chaque rampe 110 est très fin. En comparaison, dans l'art antérieur, le réglage s'effectue à l'aide d'un clapet qui ne peut être qu'ouvert ou fermé.

Ainsi, il s'avère très simple de régler indépendamment le débit fourni à chaque rampe 110. De plus, lors d'un changement de supports à convoyer à travers l'enceinte 1, il est possible et aisé de modifier le débit de vapeur fourni à une partie ou à la totalité des rampes 110.

Au final, l'installation selon l'invention offre de nombreuses opportunités de réglage et de changement partiel ou total des moyens de diffusion de vapeur ce qui permet d'adapter très finement la diffusion de vapeur dans l'enceinte au type de support et/ou de manchons convoyés.

Les moyens de diffusion de vapeur décrits sont particulièrement légers et compacts. Il est ainsi possible de réaliser des moyens de diffusion de chaleur ne pesant pas plus d'une dizaine de kilogrammes.

De manière générale, l'installation sera de préférence agencée de sorte que les diffuseurs soient répartis symétriquement de part et d'autre du convoyeur et de façon régulière dans la chambre principale afin que la diffusion de vapeur soit la plus homogène possible dans la chambre principale.

Bien entendu, les moyens de diffusion de vapeur décrits ici ne sont pas limitatifs et on peut y apporter des variantes.

En particulier, les moyens de diffusion pourront comporter un nombre différent de diffuseurs. Les diffuseurs pourront ne pas comporter de rampes mais par exemple des buses de diffusion. Les diffuseurs pourront seulement être fixés sans être réglable et/ou sans être démontable sur le châssis. Bien qu'ici, il ait été décrit que les diffuseurs sont agencés sur le châssis au niveau des montants verticaux des arceaux, les diffuseurs pourront être solidarisés aux montants horizontaux des arceaux. Dans ce cas, on évitera de préférence que lesdits montants horizontaux forment la butée définissant la position de service de la cloison.

Le châssis pourra également comporter un nombre différent d'arceaux. Les arceaux pourront être d'une autre forme que celle décrite par exemple les arceaux pourront être de forme circulaire.

Le châssis pourra ne pas être séparable en deux éléments distincts mais être d'un seul bloc. Si le châssis est séparable en deux éléments distincts, le châssis pourra également être séparable directement sur la base en plus d'être séparable une fois désolidarisé de la base.

Les moyens de chauffage par vapeur pourront ne pas former un ensemble unitaire rapporté sur la base mais être solidaire de la base ou d'une autre partie de l'enceinte.

A présent que les moyens de chauffage par vapeur 100 ont été décrits en détail, on s'attache enfin à décrire les moyens de génération de vapeur d'eau 200.

En référence aux figures 1 et 7, les moyens de génération de vapeur 200 comportent ici un canal d'amenée de vapeur 201 qui est connecté à une chaudière (non illustrée ici). Les moyens de génération de vapeur 200 comportent en outre ici un canal de purge 202.

Selon un mode de réalisation particulier, le canal d'amenée de vapeur 201 et le canal de purge 202 s'étendent tous deux à la verticale de l'installation et le long de l'installation, les moyens de génération restants étant agencés dans le bâti 6.

Les moyens de génération de vapeur occupent ainsi un volume réduit et ne gênent pas un opérateur qui se trouverait à proximité de la base 10 ce qui limite encore davantage la taille de l'installation vis-à-vis d'une installation de l'art antérieur.

Les moyens de génération de vapeur comportent ici un séparateur gaz/liquide 203 qui est connecté au canal d'amenée de vapeur 201 et qui est disposé en amont des orifices d'arrivée de vapeur 101a, 101b. Une canalisation de purge 204 est connectée entre le séparateur gaz/liquide 203 et le canal de purge 202 pour l'évacuation de l'eau issue de l'assèchement de la vapeur.

Ainsi, le séparateur gaz/liquide 203 permet d'assécher la vapeur provenant du canal d'amenée de vapeur 203 donc d'en améliorer la qualité. Il est rappelé que pour une bonne rétraction de manchon en matériau thermorétractable la vapeur doit être sèche et doit notamment présenter une température de l'ordre de 100° à 130° au niveau de la zone de contact avec les manchons.

Selon un mode de réalisation particulier, les moyens de génération de vapeur comportent une vanne à ouverture réglable 205 qui est connectée au séparateur gaz/liquide 203.

Selon un autre aspect de l'invention, les moyens de génération de vapeur comportent en outre des moyens de surchauffage de la vapeur avant son amenée aux moyens de chauffage par vapeur 100, les moyens de surchauffage étant ici agencés entre la vanne 205 et les orifices d'arrivé de vapeur 101a, 101b. Les moyens de surchauffage comprennent ici un canal de surchauffage comportant un conduit interne 210 dans lequel circule la vapeur et un conduit externe 211 concentrique au conduit interne 210 et recouvrant le conduit interne 210.

Ainsi, juste avant de pénétrer dans l'enceinte 1, la vapeur est réchauffée ce qui facilite la gestion de la température distribuée à l'enceinte 1.

Les moyens de surchauffage, le séparateur liquide/gaz 203 et la vanne 205 permettent ainsi d'améliorer la qualité de la vapeur reçue de la chaudière avant sa distribution à l'enceinte 1.

Selon un aspect de l'invention, les moyens de génération de vapeur 200 comportent des moyens de régulation adaptés à commander les moyens de génération de vapeur en fonction d'au moins une mesure de température régnant dans l'enceinte 1 de sorte à faire tendre la température mesurée vers une consigne de température donnée.

En effet, il est rappelé que le chauffage d'un manchon doit être particulièrement précis pour que le manchon se rétracte correctement sur le support. En contrôlant la température directement dans l'enceinte et non plus au niveau de la chaudière comme dans l'art antérieur, le chauffage est régulé à partir d'une mesure de température bien plus représentative du chauffage réellement subi par les manchons ce qui permet d'améliorer une thermorétraction des manchons sur les supports.

Ici les moyens de régulation comportent un capteur de température 212, comme plus visible à la figure 2, monté dans l'enceinte 1 et apte à mesurer une température régnant dans une zone déterminée de l'enceinte 1.

De préférence, la zone déterminée est à proximité immédiate d'un trajet de la vapeur en sortie des moyens de chauffage.

Ainsi, la mesure de température sera effectuée par le capteur 212 au plus près possible d'un des zones de diffusion de la vapeur aux supports afin d'obtenir une information la plus représentative possible du chauffage réellement subi par les manchons.

Selon un mode de réalisation particulier, le capteur 212 est agencé pour obtenir une information de température d'un jet de vapeur en sortie de l'un des orifices de diffusion d'une des rampes 110. Le capteur 212 est ici agencé le long du montant vertical 105a de l'un des arceaux 104 au dessus de la rampe associée 110.

Selon un mode de réalisation particulier, la zone déterminée est à proximité de la zone de diffusion de vapeur de l'enceinte 1 pour laquelle la thermorétraction du manchon est la plus délicate, par exemple à cause d'une forme particulière du support associé au manchon.

Selon un mode de réalisation particulier de l'invention, le capteur 212 est déplaçable dans l'enceinte 1 de sorte à être apte à mesurer une température régnant dans au moins deux zones déterminées différentes de l'enceinte 1. Le capteur 212 est par exemple solidarisé de façon démontable à l'enceinte 1. Ainsi, lorsqu'on souhaite mesurer la température dans une autre zone de l'enceinte 1, un opérateur peut venir désolidariser le capteur 212 d'une zone pour le solidariser de nouveau à l'enceinte 1 sur l'autre zone souhaitée.

Il est ainsi possible de réguler les moyens de génération de vapeur en fonction d'une prise de température que l'on peut adapter, par exemple si un nouveau type de support circule sur le convoyeur. Le chauffage de l'enceinte est ainsi particulièrement bien contrôlé ce qui assure une bonne qualité de thermorétraction des manchons sur les supports.

Selon un mode de réalisation particulier, les moyens de génération de vapeur 200 commandent la vanne 205 en fonction de la prise de température régnant dans l'enceinte 1 par le capteur 212 afin de réguler la température dans l'enceinte 1.

La température dans l'enceinte 1 est ainsi régulée par un contrôle du débit de vapeur fourni à l'enceinte. La vanne 205 permet donc de participer à la régulation de la température dans l'enceinte.

Bien entendu les moyens de génération de vapeur décrits ne sont pas limitatifs et on pourra apporter des variantes.

Les moyens de génération de vapeur pourront ne pas comprendre de moyens de surchauffage ou de séparateur liquide/gaz ou encore de vanne à ouverture réglable.

Les moyens de régulation de vapeur pourront comporter d'autres agencements de capteurs de température pour mesurer une température dans l'enceinte. Par exemple, les moyens de régulation pourront comporter un autre nombre de capteurs. Un capteur pourra être déplaçable dans l'enceinte de façon automatisée et non manuel. A cet effet, les moyens de régulation pourront comporter des moyens de déplacement en service du capteur d'une zone à une autre. L'enceinte pourra alors rester fermée même si on l'on souhaite mesurer la température dans une autre zone de l'enceinte. Les moyens de régulation pourront comporter plusieurs capteurs de température montés dans l'enceinte et aptes à mesurer chacun une température régnant dans une zone déterminée différente de l'enceinte, les moyens de régulation comportant des moyens de sélection d'une seule des températures mesurées par les capteurs pour commander les moyens de génération de vapeur. Ainsi, il n'y a alors pas besoin de procéder au déplacement manuel ou automatique des capteurs pour mesurer une température de l'enceinte dans une autre zone de l'enceinte mais seulement de sélectionner un autre capteur. En outre, l'enceinte peut rester fermée même si on l'on souhaite mesurer la température dans une zone de l'enceinte. Au moins l'un desdits capteurs pourra également être déplaçable dans l'enceinte de sorte à être apte à mesurer une température régnant dans au moins deux zones déterminées différentes de l'enceinte.

Bien qu'ici le capteur soit agencé sur un arceau du châssis, le capteur pourra être agencé différemment dans l'enceinte en étant par exemple agencé sur la cloison interne.

Quel que soit l'agencement du ou des capteurs, la zone ou les zones déterminées seront de préférence à proximité immédiate d'un trajet de la vapeur en sortie des moyens de chauffage.

Les moyens de régulation pourront commander les moyens de génération de vapeur à partir d'autres informations que la température dans l'enceinte comme par exemple à partir d'une information de la pression ou de la température au niveau des orifices d'arrivées de vapeur ou encore à partir d'une mesure d'une pression au niveau de la chaudière.

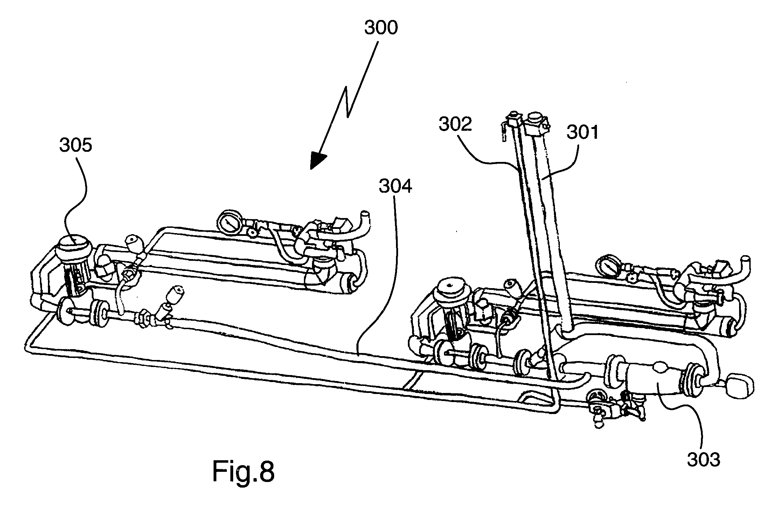

Bien qu'on ait décrit que l'installation ne comportait qu'un unique convoyeur, l'installation pourra comporter deux convoyeurs pour le convoyage de deux catégories de supports différentes ou identiques à travers deux enceintes différentes. Selon un mode de réalisation particulier, en référence à la figure 8, les moyens de génération de vapeur 300 ne comporteront alors qu'un unique canal de purge 301 et qu'un unique canal d'amenée de vapeur 302 ce qui limite la taille de l'installation. En sortie du séparateur gaz/liquide 303, une canalisation de transfert 304 amène la vapeur asséchée au niveau d'une deuxième vanne à ouverture réglable 305 qui est reliée à des moyens de surchauffage eux-mêmes connectés à des orifices d'arrivée de vapeur débouchant dans la deuxième enceinte, la deuxième vanne autorisant une régulation de la température dans la deuxième enceinte à partir d'une mesure de température prise dans la deuxième enceinte.

Bien qu'ici les vannes d'extraction de la vapeur de la cloison interne soient commandées manuellement, lesdites vannes d'extraction pourront également être commandés, par exemple être commandées par les moyens de régulation.

L'installation pourra également comporter des moyens de recyclage de l'eau évacuée par les gouttières de la base. L'eau pourra par exemple être évacuée par le canal de purge des moyens de génération de vapeur.

Les moyens de génération de vapeur pourront comporter un nombre différent d'orifices d'arrivée de vapeur.

L'enceinte, les moyens de chauffage par vapeur et les moyens de génération de vapeur ont ainsi été décrits en détail. Comme on peut le constater, l'installation selon l'invention est extrêmement modulaire et offre de multiples possibilités de réglage à un opérateur en fonction du chauffage et de la thermorétraction auxquelles l'opérateur souhaite aboutir. En outre, l'installation est de taille réduite et prend peu de place au sol. De plus, l'installation permet très facilement d'intervenir sur l'intérieur de l'enceinte grâce à la mobilité de la cloche. Par ailleurs, l'installation permet de réduire de façon significative la consommation en vapeur des moyens de chauffage par vapeur grâce aux possibilités de réglage des diffuseurs et des moyens de chauffage par vapeur en général et également grâce à la cloison interne de la cloche.

Ainsi l'invention se prête à de nombreuses variantes. Bien entendu, l'enceinte, les moyens de chauffage et les moyens de génération de vapeur sont trois aspects différents de l'installation selon l'invention. Il est bien sûr possible de ne mettre en oeuvre que l'enceinte de l'invention sans mettre en oeuvre les deux autres aspects.

Ainsi, bien qu'ici les moyens de diffusion de chaleur soient des moyens de chauffage par vapeur, les moyens de diffusion de chaleur pourront être d'un autre type tout en comportant des moyens de raccordement rapide à des moyens de génération de chaleur débouchant dans l'enceinte. De tels moyens de chauffage électrique comprennent par exemple des éléments infrarouges fixés à des parois latérales de l'enceinte et/ou de la cloche pour s'étendre de part et d'autre du convoyeur, les éléments infrarouges étant reliés à une source de courant électrique.

## Revendications

1. Installation de thermorétraction de manchons en matériau thermorétractable enfilés sur des supports, tels que des récipients, comportant :
- une enceinte (1) pourvue de moyens de diffusion de chaleur,
- au moins un convoyeur (2) pour convoyer les supports dans l'enceinte entre une entrée de l'enceinte (3) et une sortie (4) de l'enceinte,
l'enceinte comprenant une base (10) et une cloche (7) qui est montée mobile entre une position dégagée permettant l'accès au convoyeur et une position opérationnelle où elle est rapportée à étanchéité contre la base, la cloche comportant deux ouvertures au travers desquelles le convoyeur s'étend lorsque la cloche est en position opérationnelle, l'installation étant **caractérisée en ce que** la cloche comporte une cloison interne (12) montée mobile entre une position escamotée et une position de service dans laquelle la cloison délimite avec des parois latérales de la cloche et la base une chambre principale (11) de l'enceinte soumis à l'action des moyens de diffusion de chaleur lorsque la cloche est en position opérationnelle.

2. Installation selon la revendication 1, dans laquelle la position de service de la cloison est définie par butée de la cloison (12) contre les moyens de diffusion de chaleur.

3. Installation selon la revendication 1, dans laquelle la position escamotée de la cloison est définie par butée de la cloison contre la cloche.

4. Installation selon la revendication 3, dans laquelle la cloison comporte un dôme sur une première face de la cloison opposée à celle délimitant la chambre principale, le dôme étant de forme complémentaire à un sommet de la cloche reliant les parois latérales de la cloche de sorte que lorsque lè dôme est en butée contre le sommet de la cloche, la cloison est en position escamotée.

5. Installation selon la revendication 1, dans laquelle l'installation comporte des moyens de déplacement de la cloche (7) entre la position opérationnelle et la position dégagée qui agissent directement sur la cloison (12) de sorte que lorsque la cloison est déplacée depuis la position de service jusqu'à la position escamotée, la cloison vient en butée contre la cloche et entraîne la cloche de la position opérationnelle à la position dégagée.

6. Installation selon la revendication 1, dans laquelle la cloison interne est montée mobile entre la position escamotée et la position de service par un mouvement de translation.

7. Installation selon la revendication 1, dans laquelle les moyens de diffusion de chaleur sont des moyens de chauffage par vapeur d'eau (100).

8. Installation selon la revendication 7, dans laquelle la cloison (12) est équipée d'au moins une vanne à ouverture réglable (15) pour une aspiration des gaz présents dans la chambre principale (11) à travers la cloison.

9. Installation selon la revendication 7, dans laquelle la cloison (12) comporte un joint d'étanchéité à la vapeur s'étendant le long de ses bords.

10. Installation selon la revendication 9, dans laquelle le joint d'étanchéité à la vapeur est une bavette (24) inclinée en direction de la base (10) lorsque la cloison (12) est en position de service.

11. Installation selon la revendication 7, dans laquelle les parois latérales de la cloche (7) sont reliées par un sommet de la cloche qui est de forme arrondie de sorte que des gouttes de condensation se formant sur le sommet de la cloche puissent s'écouler le long desdites parois latérales vers la base (10) lorsque la cloche est en position opérationnelle.

12. Installation selon la revendication 11, dans laquelle la cloison (12) comporte une bavette (24) s'étendant le long des bords de la cloison et inclinée en direction de la base lorsque la cloison est en position de service et comporte un dôme (13) sur une première face de la cloison opposée à celle délimitant la chambre principale, le dôme étant de forme complémentaire au sommet de la cloche de sorte que des gouttes de condensation formées sur le dôme puissent s'écouler vers la bavette.

13. Installation selon la revendication 7, dans laquelle la base comporte au moins une gouttière (18) s'étendant le long du convoyeur (2), la gouttière comprenant au moins un orifice (19) relié à un canal d'évacuation.

14. Installation selon la revendication 1, dans laquelle les moyens de diffusion de chaleur sont portés par la base (10).

15. Installation selon la revendication 1, dans laquelle la cloche (7) est montée mobile entre la position dégagée et la position opérationnelle selon un mouvement de translation.

16. Installation selon la revendication 1, comportant des moyens de génération de chaleur raccordés aux moyens de diffusion de chaleur et un bâti portant la base et dans lequel sont agencés au moins en partie lesdits moyens de génération de chaleur, l'installation comportant en outre des moyens de séchage par air chaud d'un bras de retour du convoyeur, lesdits moyens de séchage étant raccordés à des moyens d'extraction d'air dans le bâti.

17. Installation selon la revendication 1, dans laquelle les moyens de diffusion de chaleur sont des moyens de chauffage par vapeur d'eau (100), l'enceinte comprenant une chambre principale (11) dans laquelle sont agencés les moyens de diffusion de chaleur et deux chambres secondaires (20, 21) encadrant la chambre principale et équipées chacune de moyens d'aspiration des gaz présents dans les chambres secondaires.

## Patentansprüche

1. Anlage zum Wärmeschrumpfen von Hüllen aus wärmeschrumpfbarem Material, die auf Träger, wie z. B. Behälter, aufgezogen werden, umfassend:
- eine Einfassung (1), die mit Wärmediffusionsmitteln versehen ist,
- mindestens einen Förderer (2), um die Träger in der Einfassung zwischen einem Einlass (3) der Einfassung und einem Auslass (4) der Einfassung zu befördern,
wobei die Einfassung eine Basis (10) und eine Glocke (7) umfasst, die beweglich zwischen einer gelösten Position, die den Zugang zum Förderer gestattet, und einer betriebsfähigen Position gelagert ist, in der sie mit Dichtheit an der Basis befestigt ist, wobei die Glocke zwei Öffnungen umfasst, durch die sich der Förderer erstreckt, wenn die Glocke in der betriebsfähigen Position ist, wobei die Anlage **dadurch gekennzeichnet ist, dass** die Glocke eine innere Trennwand (12) umfasst, die beweglich zwischen einer ausgerückten Position und einer Betriebsposition gelagert ist, in der die Trennwand mit Seitenwänden der Glocke und der Basis eine Hauptkammer (11) der Einfassung begrenzt, die der Wirkung der Wärmediffusionsmittel ausgesetzt ist, wenn die Glocke in der betriebsfähigen Position ist.

2. Anlage nach Anspruch 1, wobei die Betriebsposition der Trennwand durch die Anlage der Trennwand (12) an den Wärmediffusionsmitteln definiert ist.

3. Anlage nach Anspruch 1, wobei die ausgerückte Position der Trennwand durch die Anlage der Trennwand an der Glocke definiert ist.

4. Anlage nach Anspruch 3, wobei die Trennwand auf einer ersten Seite, die der die Hauptkammer begrenzenden Seite abgewandt ist, eine Kuppel umfasst, die eine zu einem die Seitenwände der Glocke verbindenden oberen Teil der Glocke komplementäre Form hat, sodass, wenn die Kuppel an dem oberen Teil der Glocke anliegt, die Trennwand in der ausgerückten Position ist.

5. Anlage nach Anspruch 1, wobei die Anlage Mittel zum Verschieben der Glocke (7) zwischen der betriebsfähigen Position und der gelösten Position umfasst, die direkt auf die Trennwand (12) einwirken, sodass, wenn die Trennwand von der Betriebsposition bis in die ausgerückte Position verschoben wird, die Trennwand in Anlage an die Glocke kommt und die Glocke von der betriebsfähigen Position in die gelöste Position mitnimmt.

6. Anlage nach Anspruch 1, wobei die innere Trennwand über eine Translationsbewegung beweglich zwischen der ausgerückten Position und der Betriebsposition gelagert ist.

7. Anlage nach Anspruch 1, wobei die Wärmediffusionsmittel Wasserdampf-Heizmittel (100) sind.

8. Anlage nach Anspruch 7, wobei die Trennwand (12) für ein Absaugen von in der Hauptkammer (11) vorhandenen Gasen hindurch durch die Trennwand mit mindestens einem Ventil (15) mit einstellbarer Öffnung ausgestattet ist.

9. Anlage nach Anspruch 7, wobei die Trennwand (12) eine Dampfdichtung umfasst, die sich entlang ihrer Ränder erstreckt.

10. Anlage nach Anspruch 9, wobei die Dampfdichtung eine Schürze (24) ist, die in Richtung der Basis (10) geneigt ist, wenn die Trennwand (12) in der Betriebsposition ist.

11. Anlage nach Anspruch 7, wobei die Seitenwände der Glocke (7) über einen oberen Teil der Glocke verbunden sind, der eine abgerundete Form hat, sodass Kondenswassertropfen, die sich auf dem oberen Teil der Glocke bilden, entlang dieser Seitenwände zur Basis (10) ablaufen können, wenn die Glocke in der betriebsfähigen Position ist.

12. Anlage nach Anspruch 11, wobei die Trennwand (12) eine Schürze (24) umfasst, die sich entlang der Ränder der Trennwand erstreckt und in Richtung der Basis geneigt ist, wenn die Trennwand in der Betriebsposition ist, sowie eine Kuppel (13) auf einer ersten Seite der Trennwand, die der abgewandt ist, die die Hauptkammer begrenzt, wobei die Kuppel eine zum oberen Teil der Glocke komplementäre Form hat, sodass an der Kuppel gebildete Kondenswassertropfen zur Schürze hin ablaufen können.

13. Anlage nach Anspruch 7, wobei die Basis mindestens eine Rinne (18) umfasst, die sich entlang des Förderers (2) erstreckt, wobei die Rinne mindestens eine Öffnung (19) enthält, die mit einem Ableitungskanal verbunden ist.

14. Anlage nach Anspruch 1, wobei die Wärmediffusionsmittel von der Basis (10) getragen werden.

15. Anlage nach Anspruch 1, wobei die Glocke (7) entsprechend einer Translationsbewegung beweglich zwischen der ausgerückten Position und der betriebsfähigen Position gelagert ist.

16. Anlage nach Anspruch 1, umfassend Wärmeerzeugungsmittel, die mit den Wärmediffusionsmitteln verbunden sind, sowie ein Gestell, das die Basis trägt und in dem die Wärmeerzeugungsmittel zumindest zum Teil angeordnet sind, wobei die Anlage ferner Heißluft-Trockenmittel zum Trocknen eines Rücklaufzweigs des Förderers mittels Heißluft umfasst, wobei die genannten Trockenmittel mit Luftextraktionsmitteln in dem Gestell verbunden sind.

17. Anlage nach Anspruch 1, wobei die Wärmediffusionsmittel Wasserdampf-Heizmittel (100) sind, wobei die Einfassung eine Hauptkammer (11) umfasst, in der die Wärmediffusionsmittel angeordnet sind, sowie zwei Nebenkammern (20, 21), die die Hauptkammer umrahmen und jeweils mit Saugmitteln zum Absaugen von in den Nebenkammern vorhandenen Gasen ausgestattet sind.

## Claims

1. A facility for heat-shrinking sleeves made of a heat-shrinkable material inserted onto supports, such as containers, comprising:
- an enclosure (1) provided with a heat-diffusion means,
- at least one conveyor (2) for carrying the supports through the enclosure between an intake of the enclosure (3) and an output (4) of the enclosure,
the enclosure including a base (10) and a hood (7) which is mounted mobile between an open position allowing access to the conveyor and an operational position in which it is securely mounted on the base, the hood comprising two openings through which the conveyor extends when the hood is in operational position, the facility being **characterised in that** the hood comprises an inner partition (12) mounted mobile between a retracted position and a service position in which the partition defines with side walls of the hood and the base a main chamber (11) of the enclosure subjected to the action of the heat-diffusion means when the hood is in operational position.

2. A facility according to claim 1, in which the service position of the partition is defined by the abutment of the partition (12) against the heat-diffusion means.

3. A facility according to claim 1, in which the retracted position of the partition is defined by an abutment against the hood.

4. A facility according to claim 3, in which the partition comprises a dome on a first surface of the partition opposite that defining the main chamber, the dome having a shape that complements the top of the hood connecting the side walls of the hood such that when the dome abuts against the top of the hood, the partition is in retracted position.

5. A facility according to claim 1, in which the facility comprises a means for moving the hood (7) between the operational position and the open position which directly engages with the partition (12) such that when the partition is moved from the service position to the retracted position, the partition is in abutment against the hood and drives the hood from the operational position to the open position.

6. A facility according to claim 1, in which the inner partition is so mounted as to be translatably mobile between the retracted position and the service position.

7. A facility according to claim 1, in which the heat-diffusion means is a means for heating by water steam (100).

8. A facility according to claim 7, in which the partition (12) is provided with at least one adjustable-opening valve (15) for sucking the gases in the main chamber (11) through the partition.

9. A facility according to claim 7, in which the partition (12) comprises a steam seal extending along the edges thereof.

10. A facility according to claim 9, in which the steam seal is a guard (24) tilted towards the base (10) when the partition (12) is in service position.

11. A facility according to claim 7, in which the side walls of the hood (7) are linked by a top of the hood which has a rounded shape such that condensation drops forming on the top of the hood can flow along said side walls towards the base (10) when the hood is in operational position.

12. A facility according to claim 11, in which the partition (12) comprises a guard (24) extending along the edges of the partition and tilted towards the base when the partition is in service position and comprises a dome (13) on a first surface of the partition opposite that defining the main chamber, the dome having a shape that complements the top of the hood such that drops of condensation formed on the dome can flow towards the guard.

13. A facility according to claim 7, in which the base comprises at least one gutter (18) extending along the conveyor (2), the gutter including at least one opening (19) connected to an outlet channel.

14. A facility according to claim 1, in which the heat-diffusion means is supported by the base (10).

15. A facility according to claim 1, in which the hood (7) is mounted translatably mobile between the open position and the operational position.

16. A facility according to claim 1, comprising a heat-generation means connected to the heat-diffusion means and a frame supporting the base, in which said heat-generation means is at least partially arranged, the facility also comprising a means for drying a return arm of the conveyor by hot air, said drying means being connected to an air-extraction means in the frame.

17. A facility according to claim 1, in which the heat-diffusion means is a means for heating by water steam (100), the enclosure including a main chamber (11) in which the heat-diffusion means is arranged and two secondary chambers (20, 21) flanking the main chamber, each provided with a means for sucking in the gases in the secondary chambers.
